# EUROPÄISCHE PATENTSCHRIFT

(11) **EP 2 425 958 B1**
(45) Veröffentlichungstag und Bekanntmachung des Hinweises auf die Patenterteilung: **29.01.2014**
(21) Anmeldenummer: 11190930.5
(22) Anmeldetag: 18.03.2008
(51) Int. Cl.: B29C 49/00, B29C 49/78

(54) **Vorrichtung zur fortlaufenden Herstellung eines Verbundrohres mit einer Rohrmuffe**
Apparatus for continuouly producing a compound pipe comprising a pipe socket
Dispositif de fabrication continue d'un tuyau composite doté d'un manchon tubulaire

(43) Veröffentlichungstag der Anmeldung: 07.03.2012
(62) Teilanmeldung aus: 08004992.7
(73) Patentinhaber: Hegler, Ralph Peter, 97688 Bad Kissingen (DE)
(72) Erfinder: Hegler, Ralph Peter, 97688 Bad Kissingen (DE)
(74) Vertreter: Rau, Schneck & Hübner

(56) Entgegenhaltungen:
- EP-A- 1 612 030
- DE-U1-202007 002 954
- FR-A1- 2 718 509

## Beschreibung

Die Erfindung betrifft eine Vorrichtung nach dem Oberbegriff des Anspruches 1.

Aus der EP 1 612 030 (entsprechend US 7,238,317) ist eine derartige Vorrichtung bekannt. Je größer die Nennweiten der Rohre werden, umso größer werden die Wellenberge und damit auch die relative Vergrößerung der Rohr-Muffe gegenüber dem Innendurchmesser des Verbundrohres. Dies ist darauf zurückzuführen, dass das normale Verbundrohr in vielen Fällen auch als Spitzende des Rohres verwendet wird, dass also ein Verbundrohr mit den Wellenbergen in die Rohr-Muffe eingeführt wird. Die Übergangs-Abschnitte zwischen dem bei der in-line-Herstellung voreilenden Verbundrohr und der Rohr-Muffe einerseits und der Rohr-Muffe und dem nacheilenden Verbundrohr andererseits haben also eine beträchtliche radiale Erstreckung. Insbesondere der auch nach der Durchtrennung des endlosen Rohrstrangs verbleibende Übergangs-Abschnitt zwischen Verbundrohr und Rohr-Muffe soll eine ausgeprägte radiale Erstreckung haben, also bezogen auf die Mittel-Längs-Achse steil nach außen gerichtet sein, damit beim Einführen des Spitzendes in die Rohr-Muffe bis an den Übergangs-Abschnitt heran keine Toträume bzw. keine erheblichen Toträume entstehen, in denen sich Schmutz ablagern kann. Je größer die Nennweiten sind und/oder je größer die Produktionsgeschwindigkeit ist, desto größer ist die Gefahr, dass sich im Bereich des Übergangs-Abschnitts und am Muffen-Anfang und Muffen-Ende der Innen-Schlauch nicht vollflächig an den Außen-Schlauch anlegt. Um ein vollflächiges Anlegen und damit Verschweißen des Innen-Schlauches am Außen-Schlauch im Bereich des Übergangs-Abschnitts zu erreichen, wird der Übergangs-Abschnitt im Bereich zwischen Innen-Schlauch und Außen-Schlauch dadurch in einen benachbarten Wellenberg entlüftet, dass der Außen-Schlauch im Bereich des Übergangs-Abschnitts mit mindestens einem, das benachbarte Wellental durchdringenden, in Richtung der Mittel-Längs-Achse verlaufenden Überström-Kanal versehen wird. Bei dieser vom Ansatz her ausgezeichneten Lösung hat sich gezeigt, dass unter ungünstigen Produktionsverhältnissen der Überström-Kanal nicht immer einen ausreichend großen freien Querschnitt für die angestrebte Entlüftung aufweist.

Der Erfindung liegt die Aufgabe zugrunde, eine Vorrichtung der gattungsgemäßen Art so auszugestalten, dass der Überstromkanal stets einen ausreichend freien Querschnitt erhält.

Diese Aufgabe wird erfindungsgemäß bei einer Vorrichtung nach dem Oberbegriff des Anspruches 1 durch die Merkmale im Kennzeichnungsteil des Anspruches 1 gelöst.

Insbesondere kann der zusätzliche Gas-Kanal sowohl mit Überdruck gegenüber Atmosphärendruck als auch mit Teil-Vakuum beaufschlagbar sein. Hierdurch wird erreicht, dass während der Herstellung des normalen mit Wellenbergen versehenen Verbundrohres in an sich bekannter Weise zwischen dem Kalibrierdorn und dem Innen-Schlauch ein leichter Überdruck herrscht, so dass einerseits eine gute Verschweißung zwischen dem Innen-Schlauch und den Wellentälern des Außen-Schlauchs erreicht wird und andererseits die Reibung zwischen Innen-Schlauch und Kalibrierdorn ausgeschaltet wird. Andererseits wird die Ausbildung der Überström-Kanäle dadurch positiv beeinflusst, dass während ihrer Ausformung der InnenSchlauch von innen mit einem leichten Teil-Vakuum beaufschlagt wird, wodurch der Innen-Schlauch in diesem Bereich über eine kurze Produktionsstrecke am Kalibrierdorn anliegt und dort gekühlt wird. Hierdurch wird der Innen-Schlauch in diesem Bereich durch den direkten Kontakt zum Kalibrierdorn stärker verfestigt als im übrigen Bereich, so dass die Gefahr ausgeschlossen wird, dass die Kunststoffschmelze des Innen-Schlauchs ein oder mehrere Überström-Kanäle wieder teilweise zusetzt, deren freien Durchström-Querschnitt also reduziert. Die Verschweißung des Innen-Schlauches mit dem Wellental der Wellung in diesem Bereich wird hierdurch nicht beeinträchtigt.

Weitere Merkmale, Vorteile und Einzelheiten der Erfindung ergeben sich aus der nachfolgenden Beschreibung eines Ausführungsbeispiels anhand der Zeichnung. Es zeigt:
- Fig. 1: eine im Wesentlichen aus zwei Extrudern, einer Formmaschine und einer Nachkühlvorrichtung bestehende Anlage zur Herstellung von Verbundrohren mit Rohr-Muffen in Draufsicht in schematischer Darstellung,
- Fig. 2: einen Spritzkopf und das Einlaufende der Formmaschine im Horizontalschnitt,
- Fig. 3: einen vertikalen Teil-Längsschnitt durch die Formmaschine während der Herstellung eines normalen Verbundrohres,
- Fig. 4: den vertikalen Teil-Längsschnitt gemäß Fig. 3 in einer Position kurz vor dem Beginn der Herstellung einer doppellagigen Rohr-Muffe,
- Fig. 5: den vertikalen Teil-Längsschnitt gemäß Fig. 3 und 4 in einer Position während der Herstellung von Überström-Kanälen,
- Fig. 6: den vertikalen Teil-Längsschnitt gemäß Fig. 3 bis 5 in einer Position während der Herstellung eines Übergangs-Abschnitts,
- Fig. 7: den vertikalen Teil-Längsschnitt gemäß Fig. 3 bis 6 in einer Position nach der Ausbildung des Übergangs-Abschnitts und nach dem Beginn der Herstellung der doppellagigen Rohr-Muffe,
- Fig. 8: einen vergrößerten Teil-Ausschnitt gemäß der Linie VIII in Fig. 7,
- Fig. 9: den vertikalen Teil-Längsschnitt entsprechend Fig. 3 bis 7 in einer Position am Ende der Herstellung der Rohr-Muffe vor der Ausbildung von Überström-Kanälen,
- Fig. 10: den vertikalen Teil-Längsschnitt entsprechend den Fig. 3 bis 7 und 9 nach der Ausformung von Überström-Kanälen,
- Fig. 11: den vertikalen Teil-Längsschnitt entsprechend den Fig. 3 bis 7 und 9, 10 während der Herstellung eines normalen Verbundrohres,
- Fig. 12: ein auf der Anlage hergestelltes Verbundrohr mit Rohr-Muffe,
- Fig. 13: einen Querschnitt durch das Verbundrohr gemäß der Schnittlinie XIII-XIII in Fig. 12 und
- Fig. 14: einen Schaltplan für die Drucksteuerung in schematischer Darstellung.

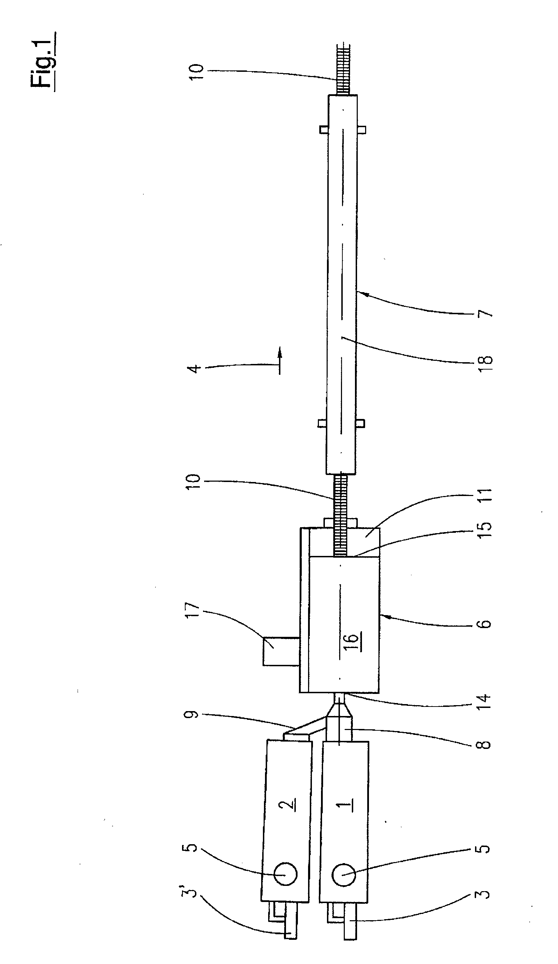

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3' angetrieben, der - bezogen auf eine Förderrichtung 4 der gesamten Anlage - stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein so genannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575 B 1 (entsprechend US-PS 5,320,797) beschrieben, worauf ausdrücklich verwiesen wird. Sie weist im Wesentlichen einen Maschinentisch 11 auf, auf dem Halbkokillen 12, 12' angeordnet sind, die jeweils zu zwei so genannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende 15 über nicht dargestellte Umlenkrollen geführt. Sie werden bei dem Umlauf in Förderrichtung 4 derart geführt, dass jeweils zwei Halbkokillen 12, 12' zu einem Kokillen-Paar vereinigt werden, wobei wiederum in Förderrichtung 4 hintereinanderfolgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein Gaskanal 24, der über ein Ventil an eine Druckgasquelle zum Einblasen von so genannter Stützluft anschließbar ist.

Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft. Er weist Kühlkanäle 26 auf, durch die Kühlwasser geführt wird, das über eine Kühlwasser-Vorlaufleitung 27 zugeführt und eine Kühlwasser-Rücklaufleitung 28 abgeführt wird. Weiterhin ist eine Luftleitung 29 vorgesehen, die an einen als zusätzlicher Gaskanal dienenden Gasspalt 30 angeschlossen ist, der sich - bezogen auf die Förderrichtung 4 - unmittelbar stromabwärts der Innen-Düse 21 zwischen dem Spritzkopf 8 und dem Kalibrierdorn 25 befindet. Die Luftleitung 29 ist über ein Ventil einerseits an eine Druckgasquelle zum Einblasen von Stützluft und andererseits an ein Teil-Vakuum anschließbar. Die Leitungen 27, 28, 29 sind durch einen konzentrisch zur Achse 18 im Spritzkopf 8 ausgebildeten, etwa rohrförmigen Versorgungskanal 31 geführt.

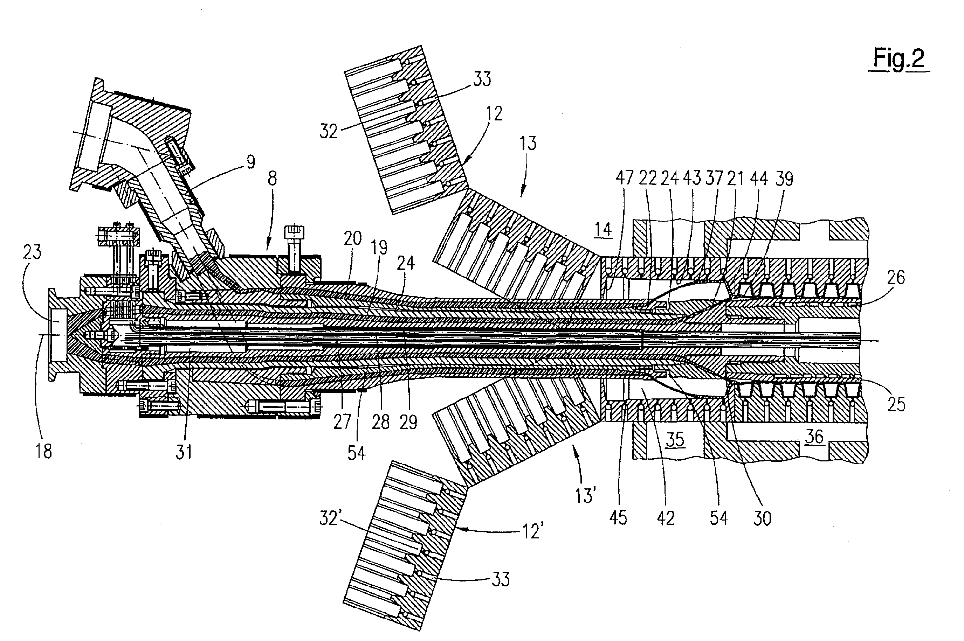

Die Halbkokillen 12, 12' weisen ringförmige Formausnehmungen 32, 32' auf, die in regelmäßigen Abständen hintereinander angeordnet sind und die jeweils an Teil-Vakuum-Kanäle 33 angeschlossen sind. Beim Einlauf der Halbkokillen 12, 12' in die Formstrecke 16 gelangen die Teil-Vakuum-Kanäle 33 - wie Fig. 2 entnehmbar ist - an Teil-Vakuum-Versorgungsquellen 35 bzw. 36, so dass die Formausnehmungen 32, 32' mit Teil-Vakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 37 extrudiert. Aufgrund des Teil-Vakuums legt sich dieser Schlauch 37 unter Formung eines mit ringförmigen Wellenbergen 38 versehenen Schlauchs in die Formausnehmungen 32, 32'. Aus dem Extruder 1 wird durch den Spritzkanal 23 dem Quer-Spritzkopf 8 Kunststoff-Schmelze zugeführt und strömt durch den inneren Schmelzekanal 19 zur Innen-Düse 21 und tritt dort als Innen-Schlauch 39 aus, der auf den Kalibrier-Dorn 25 gelangt. Dieser erweitert sich von der Innen-Düse 21 in Förderrichtung 4 leicht nach außen, bis der Innen-Schlauch 39 gegen die Wellentäler 40 des Außen-Schlauchs 37 gelangt und hier mit diesem verschweißt wird. Der Innen-Schlauch 39 und der Außen-Schlauch 37 bilden nach Abkühlung unter Erstarrung das Verbundrohr 10.

Wie insbesondere aus den Figuren 2 bis 7 und 9 bis 11 ersichtlich ist, sind die Halbkokillen 12, 12' so ausgebildet, dass jeweils in vorgegebenen Abständen innerhalb des endlos hergestellten Verbundrohres 10 Rohr-Muffen 41 ausgebildet werden. Hierzu ist in einem Paar von Halbkokillen 12, 12' eine Muffen-Ausnehmung 42 ausgebildet, die also eine im Wesentlichen glatte, zylindrische Wand 43 aufweist. Zwischen der Wand 43 der Muffen-Ausnehmung 42 und der in Förderrichtung 4 voreilenden Formausnehmung 32 ist eine Übergangs-Fläche 44 ausgebildet. An das - bezogen auf die Förderrichtung 4 - nacheilende Ende der Wand 43 der Muffen-Ausnehmung 42 schließen sich Umfangsrillen 34 zur Versteifung der Rohr-Muffe 41 und ein kegelstumpfförmiger Formabschnitt 45 an, in dem ein sich nach außen erweiterndes Einführende 46 der Muffe 41 ausgeformt wird. Daran schließt sich wiederum eine Übergangs-Fläche 47 an, die zur nächsten - in Förderrichtung 4 nacheilenden - Formausnehmung 32 führt.

Soweit die Vorrichtung bis hierher beschrieben ist, ist sie im Wesentlichen aus EP 0 995 579 A2 (entsprechend US 6,458,311) bekannt, worauf ausdrücklich verwiesen wird.

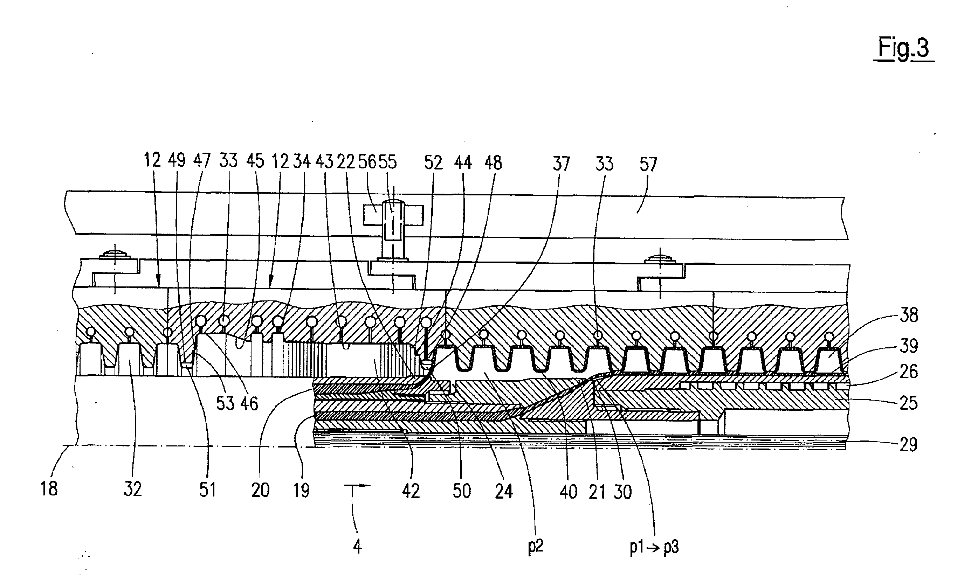

Wie aus Fig. 3 bis 11 hervorgeht, sind an der - in Förderrichtung 4 voreilenden - Übergangs-Fläche 44 und an der - in Förderrichtung 4 nacheilenden - Übergangs-Fläche 47 im Bereich des zu erzeugenden Wellentals 40 an dem die jeweilige Übergangs-Fläche 44 bzw. 47 formenden Ringsteg 48 bzw. 49 der Halbkokille 12, 12' in Richtung der Achse 18 verlaufende schlitzförmige Ausnehmungen 50, 51 ausgebildet. Diese Ausnehmungen 50, 51 verbinden also die jeweilige Übergangs-Fläche 44 bzw. 47 mit dem nächstbenachbarten ringförmigen Wellenberg 38. Die Ausnehmungen 50, 51 jedes Ringstegs 48, 49 sind mittels sich über den Umfang der jeweiligen Übergangs-Fläche 44 bzw. 47 erstreckenden und in letzteren ausgebildeten Verbindungsnuten 52, 53 miteinander verbunden.

Wie aus den Fig. 3 bis 7 und 9 bis 11 hervorgeht, erstreckt sich die die Muffen-Ausnehmung 42 aufnehmende Halbkokille 12 über eine solche Länge, dass die Ringstege 48, 49 vollständig in ihr enthalten sind. Die Trennung benachbarter Halbkokillen 12 geht also abweichend von der insoweit nur schematischen Darstellung in Fig. 2 nicht durch den Ringsteg 48 bzw. 49. Dies hat fertigungstechnische Vorteile. Wenn die Muffen-Ausnehmung 42 so lang ist, dass sie sich über mehr als eine Halbkokille 12 erstreckt, dann gilt dies entsprechend für diese Halbkokillen 12.

Benachbart zum Gaskanal 24 ist ein Entlüftungskanal 54 vorgesehen, der mit entsprechender Drosselung ständig mit der Atmosphäre verbunden ist.

In einer räumlich festen Zuordnung zu der Muffen-Ausnehmung 42 ist ein stabförmiges Schaltglied 55 mit der entsprechenden Halbkokille 12 verbunden, das einen Schalter 56 betätigt, mittels dessen die Drehzahl und damit die Extrudiergeschwindigkeit der Extruder 1, 2 verändert wird, und mittels dessen der Gaskanal 24 bzw. der Gasspalt 30 versorgt werden. Hierzu ist an der Formmaschine 6 ein Haltearm 57 angebracht, der sich oberhalb der Halbkokillen 12, 12' in Förderrichtung 4 erstreckt. An diesem Haltearm 57 ist der von dem Schaltglied 55 zu betätigende Schalter 56 angebracht. Dieser Schalter 56 wird entsprechend der Darstellung in Fig. 3 betätigt. Eine mögliche Veränderung der Drehzahl des Extruders 2, der die Kunststoff-Schmelze zur Herstellung des Außen-Schlauches 37 liefert, die Ansteuerung der so genannten Stützluft, die aus dem Gaskanal 24 strömt, die An-steuerung des Gasspaltes 30 am Kalibrierdorn 5 und schließlich die Änderung der Drehzahl und damit der Extrudiergeschwindigkeit des Extruders 1, der die Kunststoff-Schmelze zur Erzeugung des Innen-Schlauches 39 liefert, erfolgen über die Software einer Steuerung, für die der Schalter 56 bei Betätigung ein Referenzsignal liefert.

Während der Produktion des normalen gewellten Verbundrohres 10 in der in Fig. 3 rechts dargestellten Form wird der Außen-Schlauch 37 aufgrund des Teil-Vakuums in die Formausnehmungen 32 gezogen und liegt an diesen an. Hierbei wird ein geringer Überdruck p 1 von 0,05 bis 0,4 bar über Atmosphärendruck pa auf den Gasspalt 30 gegeben. Gleichzeitig wird auf den Gaskanal 24 ein ebenfalls geringer Überdruck p2 von 0,1 bis 0,4 bar, ebenfalls gegenüber Atmosphäre gemessen, gegeben. Durch den geringen Überdruck p1 innerhalb des Innen-Schlauches 39 wird verhindert, dass der Innen-Schlauch 39 an dem Kalibrierdorn 25 festklebt, bevor er mit dem Außen-Schlauch 37 verschweißt wird. In Fig. 3 ist erkennbar, dass der Innenschlauch 39 im Bereich des Gasspalts 30 vom Kalibrierdorn leicht abgehoben ist. Durch den etwas höheren Überdruck zwischen Außen-Schlauch 37 und Innen-Schlauch 39 wird sichergestellt, dass beim Abkühlen der an den Wellentälern 40 miteinander verschweißten Schläuche 37, 39 zum gewellten Verbundrohr 10 der Innen-Schlauch 39 nicht radial nach außen in den Wellenberg 38 hinein ausgewölbt wird. Beim Abkühlen der Schläuche 37, 39 stellt sich zwischen diesen Atmosphärendruck pa ein.

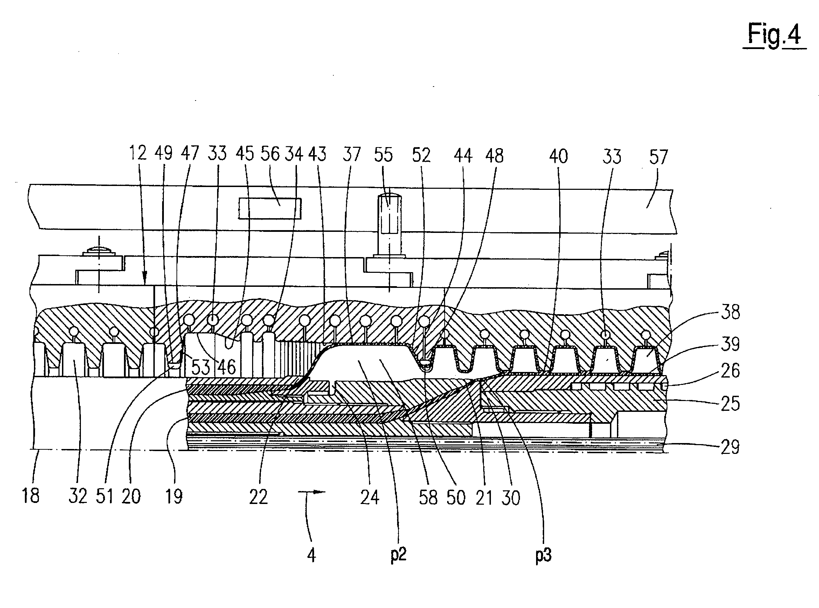

Wenn in dem in Fig. 3 dargestellten Augenblick die Übergangs-Fläche 44 in den Bereich der Außen-Düse 22 kommt, gelangt das Schaltglied 55 zum Schalter 56, durch dessen Betätigung der Überdruck p1 vom Gasspalt 30 genommen wird. Der im Gasspalt 30 anliegende Überdruck p1 wird durch ein Teil-Vakuum p3 ersetzt, so dass - wie Fig. 4 entnehmbar ist - der Innen-Schlauch 39 benachbart zur Innen-Düse 21 fest am Kalibrierdorn 25 anliegt. Hierdurch wird der Innen-Schlauch 39 stärker als zuvor abgekühlt und damit verfestigt. Gleichzeitig kann die Drehzahl des Extruders 2 verändert werden, so dass aus der Außen-Düse 22 eine kleinere oder größere Schmelzemenge pro Zeiteinheit austritt mit der Folge, dass die Wanddicke des Außen-Schlauchs 37 vergrößert wird. In jedem Fall wird die Drehzahl des Extruders 1 zur Erzeugung des Innen-Schlauchs 39 kurz vor Beginn der Erzeugung des Übergangs-Abschnitts 61 oder unmittelbar zu Beginn der Erzeugung des Übergangs-Abschnitts 61 erhöht, so dass insbesondere für die Erzeugung des Übergangs-Abschnitts die pro Zeiteinheit für den Innen-Schlauch 39 zugeführte Schmelzemenge erhöht wird.

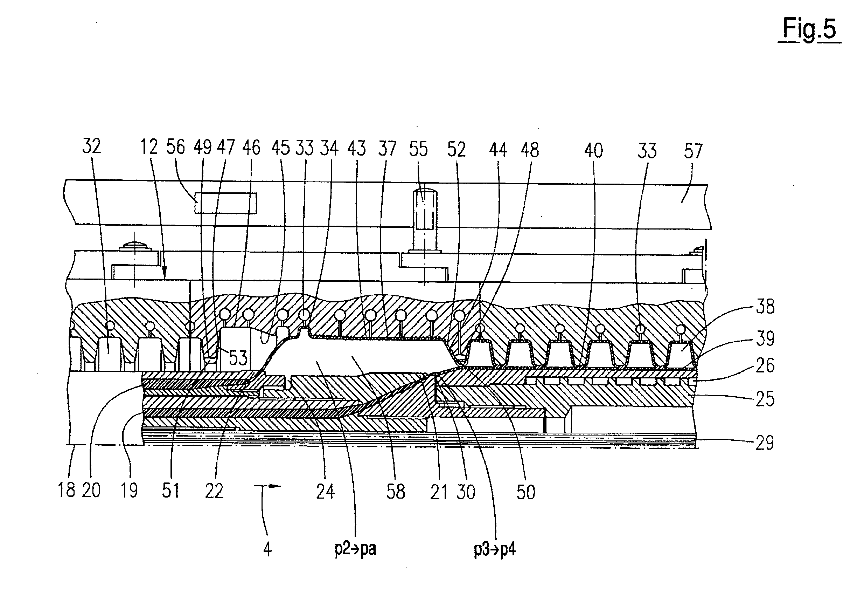

Wenn entsprechend Fig. 5 die Übergangs-Fläche 44 über den Gasspalt 30 hinweggefahren ist, wird der Überdruck p2 im Zwischenraum 58 abgeschaltet und entlüftet, so dass Atmosphärendruck pa auftritt. Da der Außen-Schlauch 37 an seiner Außenseite mit Teil-Vakuum beaufschlagt wird und im Zwischenraum 58 zwischen dem Außen-Schlauch 37 und dem Innen-Schlauch 39 Atmosphärendruck pa herrscht, legt sich der Außen-Schlauch 37 an die Wand 43 der Muffen-Ausnehmung 42 an.

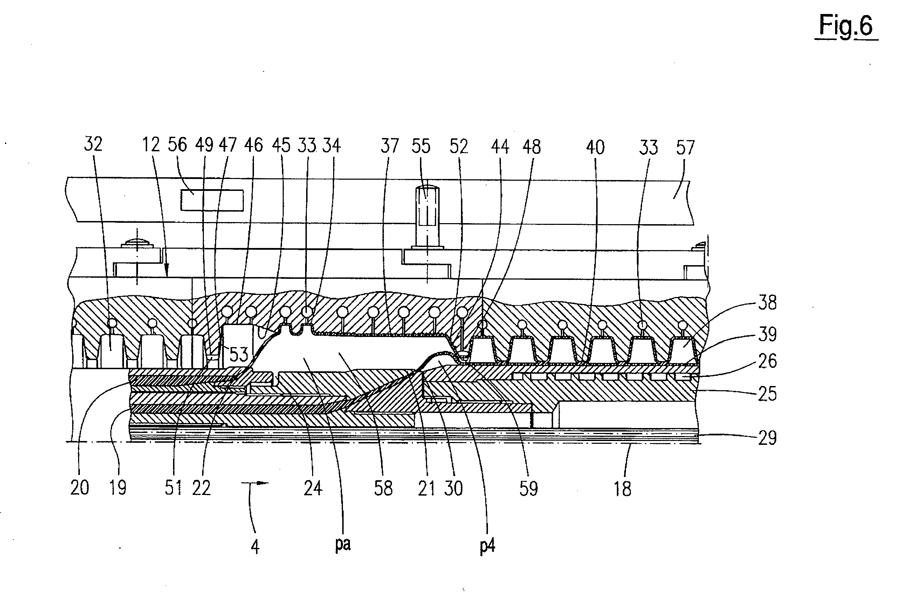

Wenn - etwa entsprechend der Darstellung in Fig. 5 und 6 - die Übergangs-Fläche 44 die Innen-Düse 21 geringfügig überfahren hat, wird der Unterdruck p3 der am Gasspalt 30 austretenden Luft z. B. auf einen Überdruck p4 von ca. 0,1 bis 0,45 bar umgeschaltet. Da der Zwischenraum 58 zwischen Innen-Schlauch 39 und Außen-Schlauch 37 im Bereich der Muffen-Ausnehmung 42 entlüftet wird, wird der Innen-Schlauch 39 nach außen gegen den Außen-Schlauch 37 gedrückt.

Wie Fig. 4 bis 8 entnehmbar ist, legt sich der Außen-Schlauch 37 gegen den Ringsteg 48 und die Übergangs-Fläche 44, wobei gleichzeitig im Bereich der schlitzförmigen Ausnehmungen 50 ein in den benachbarten Wellenberg 38 führender Überström-Kanal 59 geformt wird. An der Übergangs-Fläche 44 legt sich der Außen-Schlauch 37 auch in die Verbindungsnuten 52, wodurch Verbindungs-Kanäle 60 in dem zu formenden Außen-Rohr 37' gebildet werden. Der Innen-Schlauch 39 wird aufgrund des in ihm herrschenden Drucks zwar gegen den Außen-Schlauch 37 gedrückt, aber nicht in die Überström-Kanäle 59 bzw. die Verbindungs-Kanäle 60 eingedrückt bzw. eingeformt, so dass diese Kanäle 59, 60 zwischen dem Außen-Schlauch 37 und dem Innen-Schlauch 39 erhalten bleiben. Die in diesem Bereich befindliche Luft kann also in den in Förderrichtung voreilenden Wellenberg 38 abströmen. In dem Übergangs-Abschnitt 61 zwischen dem normalen Verbundrohr 10 und der in-line angeformten Rohr-Muffe 41 werden also der Außen-Schlauch 37 und der Innen-Schlauch 39 fast vollflächig miteinander verschweißt. Lediglich im Bereich der Überström-Kanäle 59 und der Verbindungs-Kanäle 60 ist diese Verschweißung nicht gegeben. Diese Ausgestaltung ermöglicht es, den Übergangs-Abschnitt 61 - bezogen auf die Förderrichtung 4 - stark radial, also verhältnismäßig steil ansteigend, auszubilden. Der Innen-Schlauch 39 wird nicht in die Überström-Kanäle 59 hineingedrückt, weil der Teil des Innen-Schlauchs 39, der die Überström-Kanäle 59 und die Verbindungs-Kanäle 60 begrenzt, zuvor auf dem Kalibrierdorn stärker gekühlt und dadurch verfestigt worden ist.

Während der Ausformung der Rohr-Muffe 41 kann der auf den Innen-Schlauch 39 über den Gasspalt 30 gegebene Überdruck p4 variieren. Dies hängt von dem Rohrdurchmesser, der Schmelzelastizität des eingesetzten Kunststoffs, der Wanddicke des Innen-Schlauchs und weiteren Parametern ab.

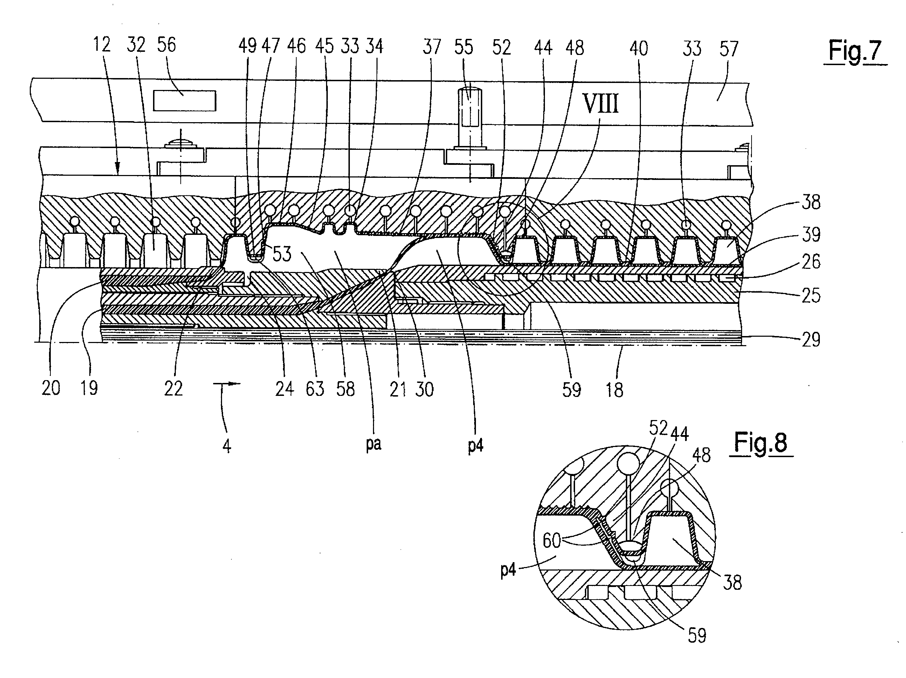

Wenn - entsprechend Fig. 7 - die Übergangs-Fläche 47 der Muffen-Ausnehmung 42 die Außendüse 22 überfährt, legt sich der Außen-Schlauch 37 gegen die Übergangs-Fläche 47 und in die in diesem ausgebildeten Verbindungsnuten 53, wodurch Verbindungs-Kanäle 62 im Außen-Schlauch 37 ausgebildet werden. Anschließend legt sich der Außen-Schlauch gegen den Ringsteg 49 und wird in die schlitzartigen Ausnehmungen 51 unter Bildung von Überströmkanälen 63 ausgeformt.

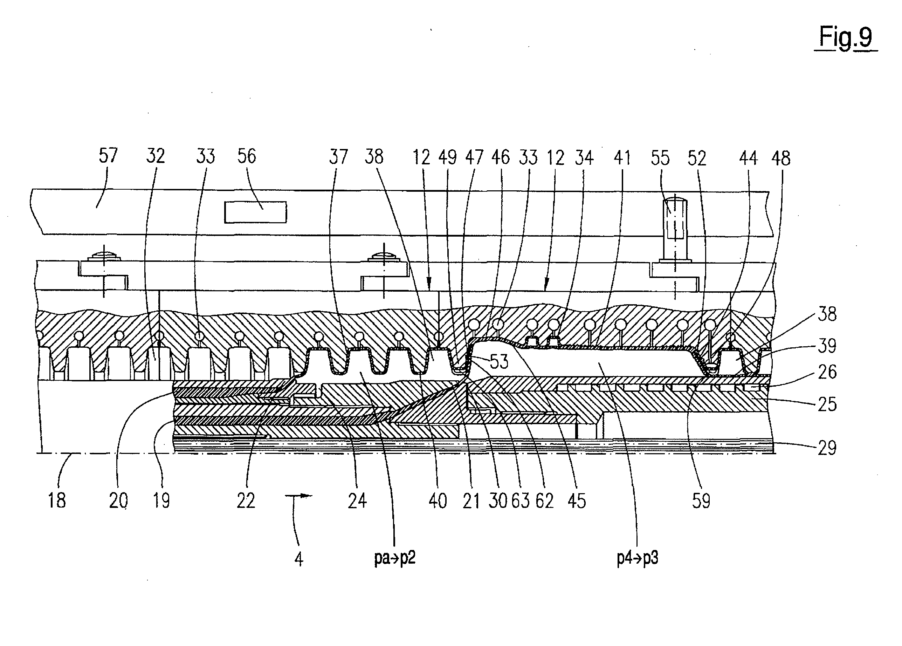

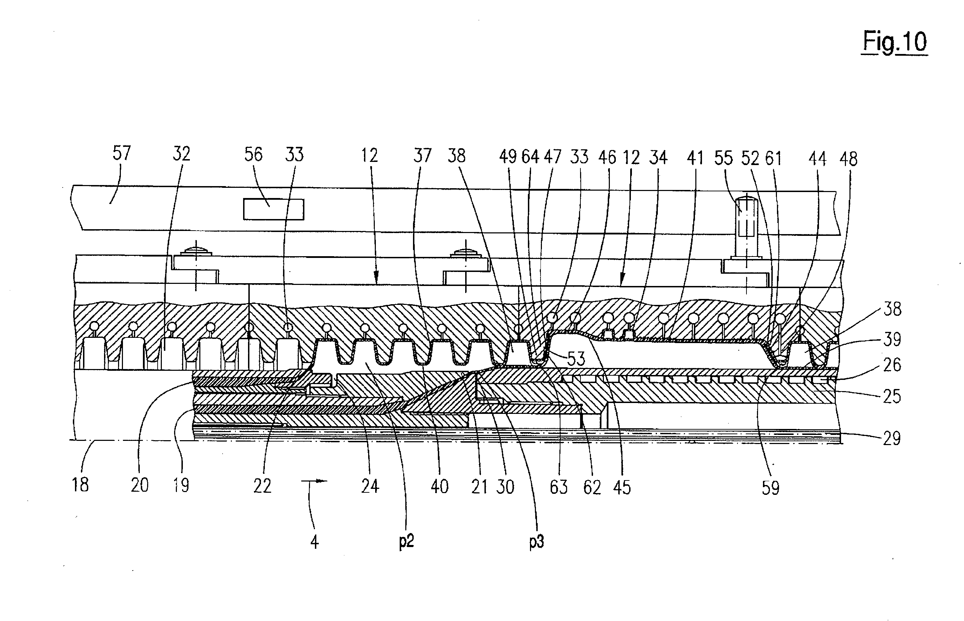

Wenn - gemäß Fig. 9 und 10 - die Übergangs-Fläche 47 die Innen-Düse 21 erreicht, dann wird einerseits der Überdruck p4 am Gasspalt 30 wieder auf Unterdruck p3 umgeschaltet und der Gaskanal 24 mit Stützluft mit dem Druck p2 beaufschlagt. Auch hier wird also der Innen-Schlauch 39 über eine kurze Fertigungsstrecke mittels Teil-Vakuum an den Kühldorn gezogen, so dass er abgekühlt und verfestigt wird. Wie bereits geschildert, legt sich der Innen-Schlauch 39 glatt gegen den Außen-Schlauch 37, wird aber nicht in die Verbindungs-Kanäle 62 und die Überström-Kanäle 63 hineingedrückt. Hierdurch wird die im Übergangs-Abschnitt 64 zwischen der Rohr-Muffe 41 und einem - bezogen auf die Förderrichtung 4 - nacheilenden normalen Verbundrohr 10 befindliche Luft in den nachfolgenden Wellenberg 38 abgeleitet.

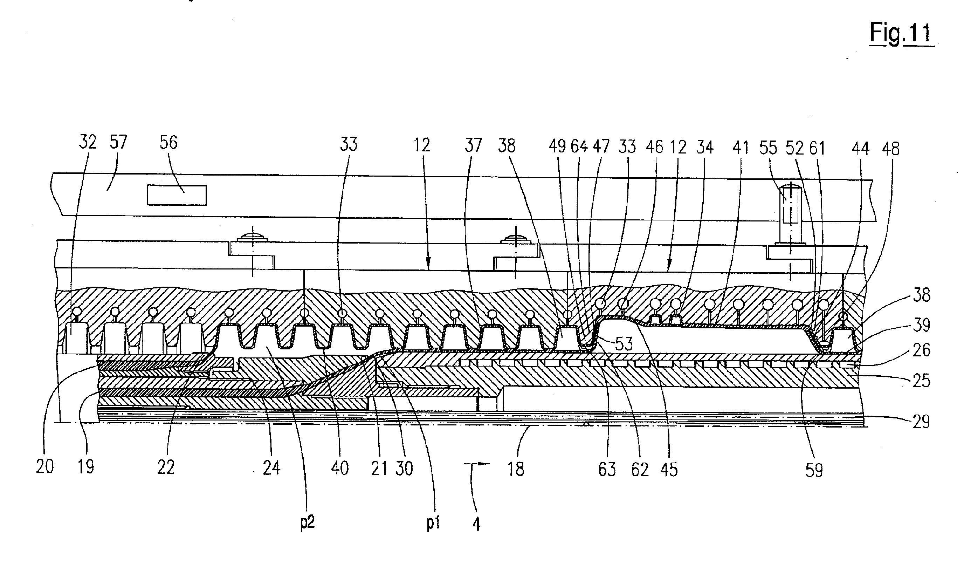

Eine kurze Produktionsstrecke später - etwa entsprechend Fig. 11 - wird der Unterdruck p3 am Gasspalt 30 wieder durch den Überdruck p1 ersetzt, so dass die verfahrenstechnischen Bedingungen wieder auf die Verhältnisse zurückgesetzt sind, die bei der Produktion des normalen Verbundrohres 10 bestehen und oben geschildert worden sind.

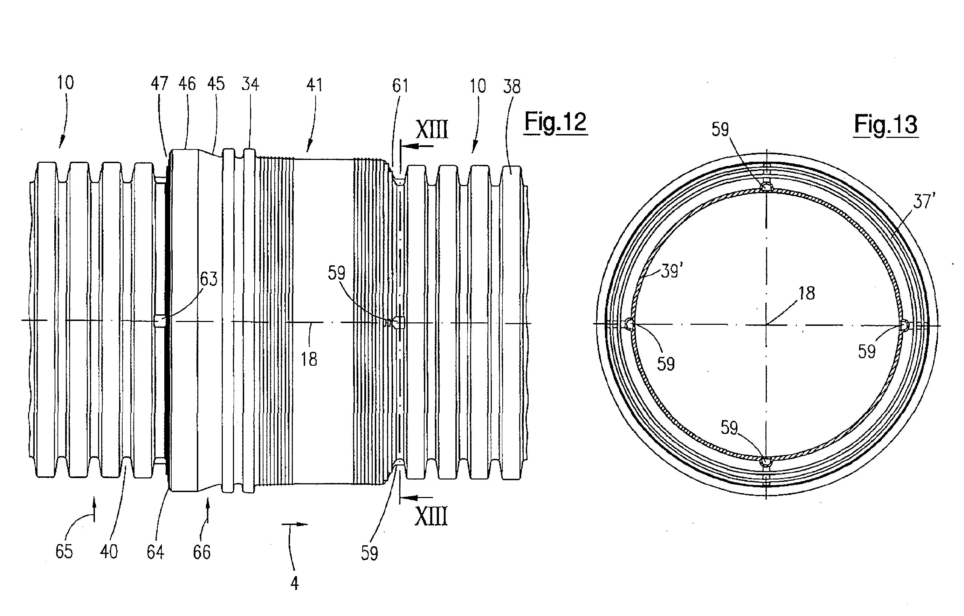

Das insbesondere in Fig. 12 und 13 dargestellte in-line endlos hergestellte Verbundrohr 10 wird im Bereich der in Förderrichtung 4 nacheilenden Übergangs-Fläche 47 durchtrennt, und zwar mit zwei Schnitten 65, 66, von denen der in Förderrichtung 4 nacheilende Schnitt 65 durch ein Wellental 40 hinter dem Übergangs-Abschnitt 64 geführt wird, während der in Förderrichtung 4 voreilende Schnitt 66 entlang dem Einführende 46 der Muffe 41 geführt wird.

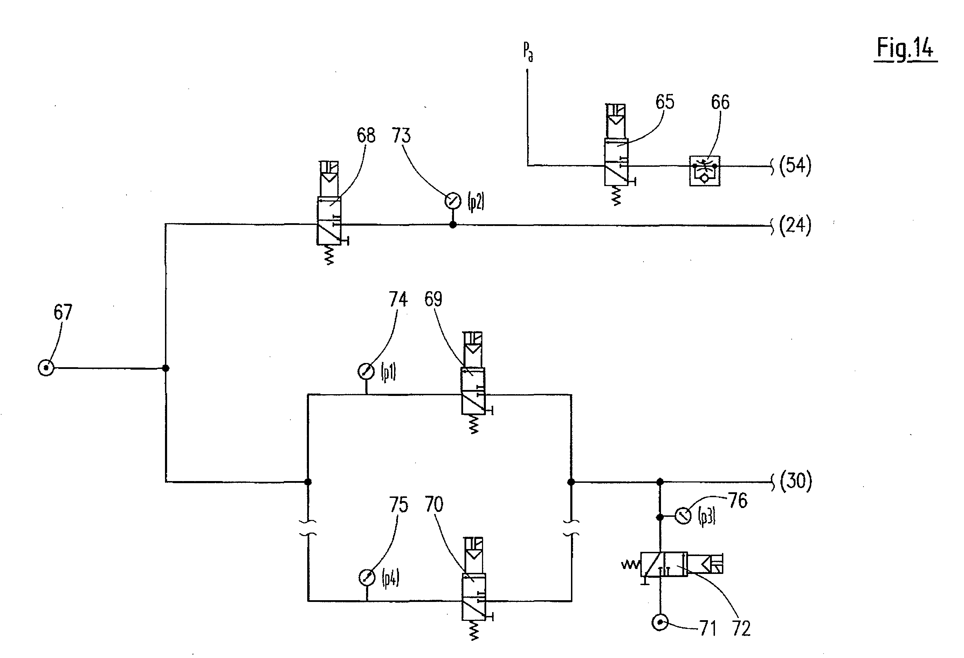

Die vorerwähnten Drucksteuerungen gehen im Einzelnen aus Fig. 14 hervor. Beim Stand der Technik ist der Entlüftungskanal 54 über ein Ventil 65 mit der Atmosphäre mit dem Druck pa verbindbar. Im dargestellten Ausführungsbeispiel entfällt das Ventil 65 und anstelle dessen ist eine Drossel 66 in den Entlüftungskanal 54 geschaltet, die auch durch einen entsprechend engen Querschnitt des Entlüftungskanals 54 gebildet sein kann. Hierdurch wird sichergestellt, dass während der Beaufschlagung des Zwischenraums 58 zwischen dem Außen-Schlauch 37 und dem Innen-Schlauch 39 mit dem Überdruck p2 in dem Zwischenraum 58 tatsächlich der Druck p2 aufrechterhalten wird.

Auf den Gaskanal 24 wird der Druck p2 von einer gemeinsamen DruckluftQuelle 67 über ein Ventil 68 gegeben.

Der Gasspalt 30 wird ebenfalls von der Druckluft-Quelle 67 über ein Ventil 69 mit dem Druck p1 beaufschlagt. Parallel zum Ventil 69 ist ein Ventil 70 vorgesehen, über das der Gasspalt 30 mit dem Druck p4 beaufschlagt wird, wobei naturgemäß nur das Ventil 69 oder das Ventil 70 geöffnet sein können. Weiterhin ist auf den Gasspalt 30 eine Teil-Vakuum-Quelle 71 über ein Ventil 72 angeschlossen, mittels dessen das Teil-Vakuum p3 auf den Gasspalt 30 gegeben wird, wie es oben geschildert wurde. Den Ventilen 68, 69, 70, 72 sind Manometer 73, 74, 75, 76 zugeordnet.

Anstelle von zwei Extrudern 1, 2 und einem Quer-Spritzkopf 8 kann auch ein einziger Extruder eingesetzt werden und ein Spritzkopf, wie er beispielsweise aus der EP 0 509 216 B (entsprechend US-Patent 5,346,384) und der EP 0 834 386 B (entsprechend US-Patent 6,045,347) bekannt ist, worauf verwiesen wird. Insbesondere bei einer solchen Ausgestaltung kann alternativ zur Drehzahländerung des Extruders auch die Geschwindigkeit der Ketten 13, 13' aus Halbkokillen 12, 12' verändert werden, wobei zur Vergrößerung der Wanddicke eine Reduktion der Geschwindigkeit der Halbkokillen 12, 12' auf der Formstrecke 16 erfolgt.

## Patentansprüche

1. Vorrichtung zur fortlaufenden Herstellung eines in einer Förderrichtung (4) aus einem glatten Innen-Rohr (39') und einem mit diesem verschweißten, mit Wellenbergen (38) versehenen Außen-Rohr (37') bestehenden Verbundrohres (10) mit einer Rohr-Muffe (41) und einer Mittel-Längs-Achse (18),
- wobei mit ringförmigen Formausnehmungen (32) versehene, sich auf einer Formstrecke (16) jeweils paarweise zu einer Form mit einer Mittel-Längs-Achse (18) ergänzende Halbkokillen (12, 12') im Kreislauf und in einer Förderrichtung (4) geführt angeordnet sind,
- wobei die Formausnehmungen (32) an in den Halbkokillen (12, 12') ausgebildete Teil-Vakuum-Kanäle (33) angeschlossen sind,
- wobei der Formstrecke (16) ein Spritzkopf (8) mindestens eines Extruders (1, 2) vorgeordnet ist,
- wobei der Spritzkopf (8) mit einer Außen-Düse (22) zur Extrusion eines Außen-Schlauches (37) und in Förderrichtung (4) nachgeordnet mit einer Innen-Düse (21) zur Extrusion eines Innen-Schlauches (39) und an seinem in Förderrichtung (4) hinten liegenden Ende mit einem Kalibrierdorn (25) versehen ist,
- wobei zwischen Außen-Düse (22) und Innen-Düse (21) aus dem Spritzkopf (8) mindestens ein Gaskanal (24) ausmündet, der über ein ansteuerbares Ventil (68) an eine Druckluftquelle (67) zum Einblasen von Stützluft zwischen den Außen-Schlauch (37) und den Innen-Schlauch (39) anschließbar ist,
- wobei zwischen Innen-Düse (21) und Kalibrierdorn (25) mindestens ein zusätzlicher Gas-Kanal (30) aus dem Spritzkopf (8) ausmündet,
- wobei mindestens ein Paar Halbkokillen (12, 12') mit einer Muffen-Ausnehmung (42) versehen ist,
- wobei an einem zwischen der Muffen-Ausnehmung (42) und einer in Förderrichtung (4) voreilenden benachbarten Formausnehmung (32) befindlichen Ringsteg (48) eine - bezogen auf die Mittel-Längs-Achse (18) - nach außen gerichtete Übergangs-Fläche (44) ausgebildet ist,
- wobei in dem Ringsteg (48) eine die Übergangs-Fläche (44) mit der benachbarten ringförmigen Formausnehmung (32) zur Erzeugung eines Wellenberges (38) verbindende Ausnehmung (50) vorgesehen ist, und
- wobei der zusätzliche Gas-Kanal (30) sowohl mit Überdruck p1 gegenüber Atmosphärendruck pa als auch mit Teil-Vakuum p3 beaufschlagbar ist,
**dadurch gekennzeichnet,**
**dass** - bezogen auf die Förderrichtung (4) - zwischen der Außen-Düse (22) und der Innen-Düse (21) ein ständig mit der Atmosphäre verbundener Entlüftungskanal (54) ausmündet.

2. Vorrichtung nach Anspruch 1, **dadurch gekennzeichnet,**
**dass** der Entlüftungskanal (54) drosselnd ausgebildet ist.

## Claims

1. Apparatus for continuously producing a compound pipe (10), in a conveying direction (4) consisting of a smooth internal pipe (39') and an external pipe (37') that is welded together with the internal pipe (39') and provided with hollow elevations (38), comprising a pipe socket (41), and a central longitudinal axis (18),
- wherein half shells (12, 12') are disposed for guided circulation in a conveying direction (4), which half shells (12, 12') are provided with annular mold recesses (32) and which combine in pairs on a molding path (16) so as to form a mold with a central longitudinal axis (18);
- wherein the mold recesses (32) are connected to partial-vacuum channels (33) in the half shells (12, 12');
- wherein an extrusion head (8) of at least one extruder (1, 2) is disposed upstream of the molding path (16);
- wherein the extrusion head (8) is provided with an outer die (22) for extrusion of an external tube (37), and with an inner die (21), which is disposed downstream when seen in the conveying direction (4), for extrusion of an internal tube (39), and with a calibrating mandrel (25) at its downstream end relative to the conveying direction;
- wherein at least one gas duct (24) exits the extrusion head (8) between the outer die (22) and the inner die (21), which gas duct (24) is connectable to a pressure air source (67) via a controllable valve (68) for blowing-in support air between the external tube (37) and the internal tube (39);
- wherein at least one additional gas duct (30) exits the extrusion head (8) between the inner die (21) and the calibrating mandrel (25);
- wherein at least one pair of half shells (12, 12') is provided with a socket recess (42);
- wherein a transition area (44), which - in relation to the central longitudinal axis (18) - is directed outwardly, is formed on an annular rib (48) that is located between the socket recess (42) and an adjacent mold recess (32) leading in the conveying direction (4);
- wherein in a recess (50) is provided in the annular rib (48), which recess (50) connects the transition area (44) with the adjacent annular mold recess (32) for forming a hollow elevation (38); and
- wherein the additional gas duct (3) is supplied with both overpressure p1 relative to atmospheric pressure pa as well as partial vacuum p3;
**characterized**
**in that** - relative to the conveying direction (4) - a vent duct (54) exits between the outer die (22) and the inner die (21), the vent duct (54) being continuously connected to atmosphere.

2. Apparatus according to claim 1, **characterized in that** the vent duct (54) has a throttling effect.

## Revendications

1. Dispositif de fabrication continue d'un tuyau composite (10) constitué d'un tuyau interne (39'), lisse dans une direction de transport (4), et d'un tuyau externe (37') soudé avec celui-ci, muni d'ondulations (38), comprenant un manchon tubulaire (41) et un axe longitudinal central (18),
- des demies coquilles (12, 12'), étant munies d'évidements de moulage en forme d'anneaux, se complétant chaque fois par paire sur un parcours de moulage (16) pour former un moule possédant un axe longitudinal central (18), étant disposées dans un circuit fermé et menées dans une direction de transport (4),
- les évidements de moulage (32) étant associés à des canalisations sous vide partiel (33) créées sur les demies coquilles (12, 12'),
- la tête de pulvérisation (8) étant munie d'une buse externe (22) pour l'extrusion d'un tuyau externe (37) et étant adjointe, dans la direction de transport (4), d'une buse interne (21) pour l'extrusion d'un tuyau interne (39) et étant munie à son extrémité se situant à l'arrière de sa direction de transport (4) d'un mandrin de calibrage (25),
- au moins une canalisation de gaz (24), débouchant de la tête de pulvérisation (8) entre la buse externe (22) et la buse interne (21), pouvant être raccordée à une source d'air sous pression (67) par l'intermédiaire d'une vanne (68), pouvant être pilotée, pour insuffler de l'air de soutien entre le tuyau externe (37) et le tuyau interne (39),
- au moins une canalisation de gaz (30) supplémentaire débouchant de la tête de pulvérisation (8) entre la buse interne (21) et le mandrin de calibrage (25),
- au moins une paire de demies coquilles (12, 12') étant munie d'un évidement de manchon (42),
- une surface de transition (44) étant formée, dirigée vers l'extérieur, entre l'évidement du manchon (42) et une collerette (48), se situant sur un évidement de moule (32) voisin, dépassant dans la direction de transport (4), par rapport à l'axe longitudinal central (18),
- un évidement (50) reliant une surface de transition (44) avec un évidement de moulage (32) de forme circulaire étant prévu dans la collerette (48) pour la création d'un pic d'ondulation (38), et
- la canalisation de gaz (30) supplémentaire pouvant être soumise à une surpression p1 par rapport à la pression atmosphérique pa ainsi qu'à une pression p3 de vide partiel,
**caractérisé en ce**
**que**, par rapport à la direction de transport (4), une canalisation de dégazage (54), reliée constamment à l'atmosphère, débouche entre la buse externe (22) et la buse interne (21).

2. Dispositif selon la revendication 1 **caractérisé en ce que** la canalisation de dégazage (54) est conçue avec un étranglement.
